Europäisches Patentamt

(19) European Patent Office

Office européen des brevets

(11) Numéro de publication: **0 222 791**
**B1**

(12) **FASCICULE DE BREVET EUROPEEN**

(45) Date de publication du fascicule du brevet: **13.06.90**

(21) Numéro de dépôt: **86902439.8**

(22) Date de dépôt: **29.04.86**

(86) Numéro de dépôt international:
**PCT/FR86/00146**

(87) Numéro de publication internationale:
**WO 86/06398 06.11.86 Gazette 86/24**

(51) Int. Cl.⁵: **C 09 D 135/02,**
**C 09 J 135/02, C 08 L 23/08,**
**C 08 J 3/09, C 08 J 3/11**

(54) **MELANGES LIQUIDES A BASE DE POLYMERES D'ETHYLENE, LEUR PROCEDE D'OBTENTION ET UN PROCEDE DE REVETEMENT OU DE COLLAGE LES UTILISANT.**

(30) Priorité: **02.05.85 FR 8506646**

(43) Date de publication de la demande:
**27.05.87 Bulletin 87/22**

(45) Mention de la délivrance du brevet:
**13.06.90 Bulletin 90/24**

(84) Etats contractants désignés:
**AT BE CH DE FR GB IT LI LU NL SE**

(56) Documents cités:
**EP-A-0 064 893**
**EP-A-0 065 450**
**FR-A-2 306 243**
**FR-A-2 386 402**
**US-A-4 001 159**

(73) Titulaire: **NORSOLOR S.A.**
**Tour Aurore Place des Reflets**
**F-92080 Paris la Défense Cédex 5 (FR)**

(72) Inventeur: **HERT, Marius**
**21, chaussée Brunehaut**
**Estrée Cauchy F-62690 Aubigny en Artois (FR)**

(74) Mandataire: **Dubost, Thierry**
**c/o NORSOLOR Service Propriété Industrielle**
**B.P. 57**
**F-62670 Mazingarbe (FR)**

Courier Press, Leamington Spa, England.

# Description

Le document US—A—4.001.159 décrit une dispersion aqueuse d'un copolymère oléfine-acrylate comprenant de 5 à 60% en moles d'une oléfine ayant de 3 à 20 atomes de carbone, de 40 à 95% en moles d'acrylate et de 0 à 30% en moles d'un composé choisi parmi les halogènures d'acryloyle et l'anhydride maléique, ledit copolymère étant présent en proportion de 1 à 300 parties en poids pour 100 parties en poids d'eau. Le copolymère oléfine-acrylate étant soluble dans de nombreux solvants tels que hydrocarbures, esters, cétones, amides, éthers et hydrocarbures halogénés, la dispersion aqueuse peut être obtenu préparant d'abord une solution de viscosité allant jusqu'à 60 poises puis en dispersant cette solution dans l'eau, enfin en éliminant le solvant. Pour obtenir une dispersion aqueuse stable il est nécessaire d'effectuer la dispersion en présence d'un agent tensio-actif, de préférence non-ionique ou anionique, utilisé à raison de 0,1 à 20% en poids par rapport au copolymère oléfine-acrylate.

Le document FR—A—2.386.402 décrit un procédé de revêtement d'un support par une couche de polymère, ledit procédé comprenant:

a) la préparation d'une suspension de polymère dans un liquide organique,

b) l'enduction du support par ladite suspension de polymère,

c) l'élimination du liquide organique; ledit procédé étant caractérisé en ce que la suspension de polymère est obtenue par trempe d'une solution dudit polymère. Parmi les polymères envisagés figurent un polyéthylène greffé par un faible quantité d'un acide carboxylique insaturé tel que l'acide(méth)acrylique. Le liquide organique peut être un solvant dudit polymère, tel que notamment un hydrocarbure paraffinique. La concentration du polymère dans la suspension est de préférence inférieure à 8% en poids. De préférence la trempe est effectuée à une température au plus égale à 50°C.

Le document EP—A—0.065.450 décrit un métal enduit d'une couche de film polymère d'épaisseur comprise entre 10 et 500 µm, ledit film consistant en un terpolymère comprenant de 88 à 98,7% en moles de motifs dérivés de l'éthylène, de 1 à 10% en moles de motifs dérivés d'un (méth)acrylate d'alkyle et de 0,3 à 3% en moles de motifs dérivés de l'anhydride maléique, et ayant un indice de fluidité compris entre 2 et 10 dg/min. Le procédé d'obtention du métal consiste à enduire ledit film polymère sur un support métallique à une température comprise entre 140°C et 300°C, la vitesse de défilement dudit support métallique étant comprise entre 40 et 400 mètres par minute.

Un premier objet de la présente invention consiste en des mélanges liquides à température ambiante comprenant au moins un polymère d'éthylène (A) et au moins un solvant (B), caractérisé en ce que:

a) le polymère d'éthylène (A) comprend au moins un terpolymère ayant un indice de fluidité compris entre 2 et 500 dg/min et comprenant:

de 83 à 95,7% en moles de motifs dérivés de l'éthylène,

de 4 à 15% en moles de motifs dérivés d'au moins un acrylate ou méthacrylate d'alkyle, le groupe alkyle ayant de 1 à 6 atomes de carbone, et

de 0,3 à 2% en moles de motifs dérivés de l'anhydride maléique.

b) le solvant (B) est choisi parmi les hydrocarbures aliphatiques, cycloaliphatiques et aromatiques ayant de 5 à 12 atomes de carbone, les esters et les solvants chlorés.

Selon un mode de réalisation préféré de la présente invention, le terpolymère a une masse moléculaire moyenne en nombre Mn supérieur ou égale à 5.000 et/ou un indice de polydispersité (défini comme le rapport de la masse moléculaire moyenne en poids Mw à Mn et calculé à partir de la courbe de répartition des masses moléculaires obtenue en chromatographie de perméation de gel) supérieur à 5. Comme exemples possibles de solvants (B) on peut citer notamment le n-pentane, le n-hexane, le méthylcyclohexane, le n-heptane, le xylène, le styrène, le white-spirit, une coupe d'hydrocarbures ayant de 9 à 12 atomes de carbone telle que celle commercialisée sous la marque ISOPAR, des esters de l'acide phtalique tel le phtalate de butyle, des solvants chlorés tels le trichloroéthylène et le perchloréthylène.

Les mélanges liquides selon l'invention peuvent être répertoriés en deux catégories:

d'une part les solutions homogènes d'au moins un polymère d'éthylène (A) dans au moins un solvant (B), et

d'autre part les émulsions aqueuses obtenues à partir des solutions homogènes précitées.

En vue de préserver la facilité d'emploi des solutions homogènes, il est souhaitable que leur viscosité ne dépasse pas une certaine limite, comme il est connu de l'homme de l'art. Pour cette raison, la concentration du terpolymère dans le solvant (B) est de préférence inférieure ou égale à 40% en poids, cette limite étant d'autant plus faible que l'indice de fluidité de terpolymère est faible et que la température est basse; par exemple la concentration d'un terpolymère d'indice de fluidité égal à 7 dg/min ne devra pas dépasser environ 15% en poids à 30°C. Il est cependant possible d'obtenir, à partir de polymère (A) ci-dessus défini, des solutions plus concentrées (par exemple 50% en poids) qui sont particulièrement utiles pour leur transformation en émulsions.

Les mélanges liquides selon l'invention peuvent comprendre en outre au moins un pigment de coloration (tel qu'une phtalocyanine) en proportion inférieure ou égale à 2% en poids par rapport au polymère (A) et/ou au moins un agent de modification ou de réticulation du polymère (A) (tel qu'un alcool lourd, une mono-, di- ou trialcanolamine ou bien un alcool polyfonctionnel) en proportion inférieure ou égale à 2% en moles par rapport au polymère (A).

Les émulsions aqueuses selon l'invention comprennent, pour 100 parties en poids du mélange du polymère (A) et du solvant (B), de 50 à 200 parties en poids d'eau contenant au moins un agent tensio-actif. Les agents tensio-actifs utilisables pour les émulsions selon l'invention sont de préférence des agents non ioniques tels que les polyéthers oxydes; ils sont généralement présents à raison de 0,5 à 10% en poids par rapport au polymère (A). Les émulsions selon l'invention peuvent en outre comprendre d'une part au moins un agent antimoussant tel que le méthanol à raison d'au plus 5% en poids par rapport à l'eau et d'autre part au moins un agent de modification chimique du terpolymère tel que l'ammoniaque à raison d'au plus 2% en moles par rapport au terpolymère. Les émulsions selon l'invention comprennent un outre de préférence au moins un stabilisant polymère hydrosoluble, tel qu'un polyacrylamide ionisé partiellement ou non, un alcool polyvinylique ou un ether de cellulose, à raison de 0,01 à 0,2% en poids par rapport à l'eau.

Un second objet de la présente invention est un procédé d'obtention des mélanges liquides décrits précédemment, caractérisé en ce qu'il comprend dans une première étape la dissolution du polymère (A), par agitation, dans le solvant (B), à une température T (exprimée en degrés Celsius) telle que:

$$35 \leqslant T \leqslant \theta$$

θ étant la température d'ébullition du solvant (B). Les solutions obtenues par ce procédé sont totalement homogènes et peuvent être refroidies jusqu'à la température ambiante sans perdre leur homogénéité.

Pour l'obtention d'émulsions aqueuses, le procédé selon l'invention se caractérisé en ce qu'il comprend dans une seconde étape l'addition progressive et sous intense agitation, à une température comprise entre 35 et 100°C, du mélange d'eau, d'agent tensio-actif et, le cas échéant, d'agent antimoussant et/ou d'agent de modification chimique. Le stabilisant polymère hydrosoluble peut être ajouté soit pendant soit après cette seconde étape.

Selon une variante préférée, les émulsions aqueuses sont obtenues par introduction de la solution de polymère (A) et de solvant (B) dans la phase aqueuse.

Un troisième objet de la présente invention consiste en un procédé de revêtement d'un support par trempage dans ou pulvérisation d'un mélange liquide comprenant au moins un polymère d'éthylène (A) dans au moins un solvant (B), caractérisé en ce que ledit mélange liquide est un mélange tel que décrit précédemment. Lorsque le mélange liquide utilisé est une solution dans un solvant à bas point d'ébullition, le revêtement est finalement obtenu après évaporation dudit solvant. Il est également possible d'obtenir un revêtement sans évaporation du solvant si ce dernier est un solvant à haut point d'ébullition et si la concentration en polymère (A) est élevée (par exemple au moins égale à 30% en poids). Des exemples de tels solvants sont: un coupe d'hydrocarburs saturés en C10—C12, des huiles de fluxage, le phtalate de butyle. Lorsque le mélange liquide utilisé est une émulsion aqueuse, le procédé de revêtement selon l'invention comporte l'évaporation de l'eau et, le cas échéant, celle du solvant s'il s'agit d'un solvant à bas point d'ébullition.

Les supports auxquels s'applique le procédé de revêtement selon l'invention peuvent être de natures diverses: métaux, résines synthétiques, verre, etc. . .

Le procédé de revêtement selon l'invention peut notamment être avantageusement utilisé pour la protection (contre les éclats de verre) de récipients tels que notamment tubes à essais, ampoules pharmaceutiques autocassables, pour l'adhésivage de fils ou fibres ou pièces métalliques entrant dans la fabrication d'articles en caoutchouc ou élastomères tels que notamment des armatures de pneumatiques, pour l'ensimage des fibres de verre utilisées, par exemple, comme agent de renforcement des matériaux thermoplastiques.

Le procédé de revêtement peut conduire soit à une protection par un revêtement adhésif soit à la protection du substrat par un revêtement non adhésif. Cette seconde variante est particulièrement intéressante pour la protection de surfaces métalliques contre les chocs et les rayures. Après installation de l'appareillage comportant ces surfaces métalliques protégées, le revêtement protecteur peut être aisément retiré par simple pelage. Afin d'obtenir ce résultat, les solutions selon l'invention contiennent une faible quantité d'un agent d'anti-adhésivité; on peut utiliser l'huile de silicone, par exemple à des teneurs de l'ordre de 0,5% par rapport à la solution.

Un autre objet de l'invention consiste en un procédé de collage de deux substrats au moyen d'un adhésif caractérisé en ce que l'adhésif est constitué d'une solution ou d'une émulsion telles que décrites ci-dessus ou du produit obtenu après évaporation du solvant et, le cas échéant, de l'eau.

Ainis un substrat peut recevoir un revêtement adhésif et ce dernier peut être utilisé pour recevoir un second substrat, assurant ainsi le collage entre les deux substrats. Dans ce type d'application on peut citer comme second substrat:

un encre (le revêtement selon l'invention sert alors de couche d'accrochage sur, par exemple, un polymère non imprimable comme le polyéthylène téréphtalate)

un textile (le revêtement selon l'invention peut ainsi servir au thermocollage).

Les exemples ci-après sont donnés à titre illustratif et non limitatif de la présente invention. Sauf indication contraire, les parties sont des parties en poids.

### Exemple 1

On dissout à 40°C, par agitation, 1 partie d'un terpolymère ayant un indice de fluidité de 4 dg/min. et comprenant 89% en moles d'éthylène, 10% en moles d'acrylate d'éthyle et 1% en moles d'anhydride maléïque, dans 10 parties de xylène. Le terpolymère utilisé a une masse moléculaire Mn égale à 18.000. La solution obtenue conserve son homogénéité après refroidissement à température ambiante.

### Exemple 2

La solution de polymère préparée conformément à l'exemple 1 est utilisée pour adhésiver une plaque d'acier par trempage puis séchage sous vide. Cette plaque est ensuite associée par thermocollage à 120°C, sous 10 bars et pendant 5 minutes, à une feuille de 1,6 mm d'épaisseur d'un caoutchouc éthylène/propylène/diène d'indice de fluidité 0,2 dg/min. commercialisé sous la marque DUTRAL 054.

La résistance au pelage du caoutchouc, mesurée selon la norme ASTM D 903—49, est égale à 2,5 kg/cm.

### Exemple 3 (comparatif)

On reproduit l'expérience de l'exemple 2 sans adhésiver la plaque d'acier. La résistance au pelage du caoutchouc, mesurée selon la norme ASTM D 903—49, est égale à 0,05 kg/cm.

### Exemple 4

On reproduit l'expérience de l'exemple 2 aux exceptions suivantes près:

le caoutchouc est formulé, de manière connue en soi, au moyen de soufre et de noire de carbone en vue d'une vulcanisation ultérieure.

l'épaisseur de la feuille de caoutchouc est de 3 mm.

le thermocollage est effectué à 180°C en même temps que la vulcanisation.

La résistance au pelage du caoutchouc vulcanisé, mesurée selon la norme ASTM D 903—49, est égale à 3,5 kg/cm.

### Exemple 5 (comparatif)

On reproduit l'expérience de l'exemple 4 sans adhésiver la plaque d'acier. La résistance au pelage du caoutchouc vulcanisé, mesurée selon la norme ASTM D 903—49, est égale à 0,05 kg/cm.

### Exemple 6

On réalise une solution contenant 40 parties d'un terpolymère d'indice de fluidité 70 dg/min. contenant 94,3% en moles, d'éthylène, 4,7% en moles d'acrylate de butyle et 1% en moles d'anhydride maléique, et 60 parties de phtalate de butyle, par mélangeage sous agitation des constituants à 60°C.

On trempe une pièce d'acier dans la solution portée à 100°C. En refroidissant la solution se solidifie progressivement pour donner un solide cireux ayant une bonne adhérence sur l'acier, sans élimination du solvant.

### Exemple 7

A 100 parties de la solution obtenue à l'exemple 6 on ajoute 0,5 partie d'huile de silicone. Après application dans les mêmes conditions puis refroidissement on obtient une pellicule de protection facilement pelable; la surface de la pièce d'acier est inaltérée.

### Exemple 8

On réalise un solution contenant 50 parties d'un terpolymère d'indice de fluidité 150 dg/min. comprenant 92,3% en moles d'éthylène, 6,7% en moles d'acrylate d'éthyle et 1% en moles d'anhydride maléïque, et 50 parties de xylène.

48 parties de cette solution sont versées dans une phase aqueuse contenant 48 parties d'eau, 0,24 partie de $NH_4OH$, 1,9 partie de méthanol, 1,2 partie d'un émulsifiant oxyde de propylène/ oxyde, d'éthylène et 0,09 partie d'un stabilisant copolyacrylamide ionisé à 40%.

L'émulsion est appliquée sur un tissu à travers un grille par points puis séchée très rapidement. Le tissu revêtu obtenu est ensuite passé sur une calandre chauffée à 180°C en même temps qu'un autre tissu sur lequel il adhère fortement.

La même émulsion est appliquée de la même façon après avoir été additionnée de diéthanolamine en une quantité correspondant à 2 fois la stoechiométrie par rapport aux fonctions anhydride.

On obtient ainsi un contre-collage particuliérement résistant aux solvants de nettoyage.

### Revendications

1. Mélanges liquides à température ambiante comprenant au moins un polymère d'éthylène (A) et au moins un solvant (B), caractérisé en ce que:

a) le polymère d'éthylène (A) comprend au moins un terpolymère ayant un indice de fluidité compris entre 2 et 500 dg/min. et comprenent:

de 83 à 95,7% en moles de motifs dérivés de l'éthylène,

de 4 à 15% en moles de motifs dérivés d'au moins un acrylate ou méthacrylate d'alkyle, le groupe alkyle ayant de 1 à 6 atomes de carbone, et

de 0,3 à 2% en moles de motifs dérivés de l'anhydride maléïque,

b) le solvant (B) est choisi parmi les hydrocarbures aliphatiques, cycloaliphatiques et aromatiques ayant de 5 à 12 atomes de carbone, les esters et les solvants chlorés.

2. Mélanges liquides selon la revendication 1, caractérisés en ce que le terpolymère a une masse moléculaire moyenne en nombre M supérieure ou égale à 5.000.

3. Mélanges liquides selon l'une des revendications 1 et 2, caractérisés en ce que le terpolymère a une indice de polydispersité supérieure à 5.

4. Mélanges liquides selon l'une des revendications 1 à 3, caractérisés en ce qu'ils sont des solutions homogènes d'au moins un polymère d'éthylène (A) dans au moins un solvant (B).

5. Mélanges liquides selon l'une des revendications 1 à 4, caractérisés en ce que la concentration du terpolymère dans le solvant (B) est inférieure ou égale à 40% en poids.

6. Mélanges liquides selon l'une des revendications 1 à 5, caractérisés en ce qu'ils contiennent en outre un agent d'anti-adhésivité tel l'huile de silicone.

7. Mélanges liquides selon l'une des revendications 1 à 3, caractérisés en ce qu'ils sont des émulsions aqueuses comprenant, pour 100 parties en poids du mélange de polymère (A) et du solvant (B), de 50 à 200 parties en poids d'eau contenant au moins un agent tensio-actif.

8. Mélanges liquides selon la revendication 7, caractérisés en ce que l'agent tensio-actif est un agent non ionique présent à raison de 0,5 à 10% en poids par rapport au polymère (A).

9. Mélanges liquides selon l'une des revendications 7 et 8, caractérisés en ce qu'ils comprennent en outre au moins un agent anti-moussant à raison d'au plus 5% en poids par rapport à l'eau.

10. Mélanges liquides selon l'une des revendications 7 à 9, caractérisés en ce qu'ils comprennent en outre au moins un agent de modification chimique du terpolymère à raison d'au plus 2% en moles par rapport audit terpolymère.

11. Mélanges liquides selon l'une des revendications 7 à 10, caractérisés en ce qu'ils comprennent en outre au moins un stabilisant polymère hydrosoluble à raison de 0,01 à 0,2% en poids par rapport à l'eau.

12. Procédé d'obtention de mélanges liquides comformes à l'une des revendications 1 à 3, caractérisé en ce qu'il comprend dans une première étape la dissolution du polymère (A), par agitation, dans le solvant (B) à une température T (exprimée en degrés Celsius) telle que: $35 \leq T \leq \theta$, $\theta$ étant la température d'ébullition du solvant (B).

13. Procédé selon la revendication 12, caractérisé en ce que, en vue d'obtenir des émulsions aqueuses selon l'une des revendications 7 à 11, il comprend dans une seconde étape l'addition progressive et sous intense agitation, à une température comprise entre 35 et 100°C, du mélange d'eau, d'agent tensio-actif et, le cas échéant, d'agent anti-moussant et/ou d'agent de modification chimique.

14. Procédé selon la revendication 12, caractérisé en ce que, en vue d'obtenir des émulsions aqueuses selon l'une des revendications 7 à 11, il comprend dans une seconde étape l'addition progressive et sous agitation de la solution obtenue dans la première étape, à une température comprise entre 35 et 100°C, dans mélange d'eau, d'agent tensio-actif et, le cas échéant, d'agent anti-moussant et/ou d'agent de modification chimique.

15. Procédé de revêtement d'un support par trempage dans ou pulvérisation d'un mélange liquide comprenant au moins un polymère d'éthylène (A) dans au moins un solvant (B), caractérisé en ce que ledit mélange liquide est un mélange selon l'une des revendications 1 à 11.

16. Procédé de revêtement selon la revendication 15, caractérisé en ce que le revêtement est obtenu après évaporation du solvant, le cas échéant, de l'eau.

17. Procédé de collage de deux substrats au moyen d'un adhésif, caractérisé en ce que l'adhésif est constitué d'une solution ou d'une émulsion conforme à l'une des revendications 1 à 5 et 7 à 11 ou du produit obtenu aprés évaporation du solvant et, le cas échéant, de l'eau.

## Patentansprüche

1. Bei Umgebungstemperatur flüssige Mischungen enthaltend mindestens ein Ethylenpolymer (A) und mindestens ein Lösungsmittel (B), dadurch gekennzeichnet, daß

a) das Ethylenpolymer (A) mindestens ein Terpolymer enthält, das einen Fließindex zwischen 2 und 500 dg/min besitzt und enthält:

83 bis 95,7 Mol-% an von Ethylen abstammenden Einheiten,

4 bis 15 Mol-% an Einheiten, die von mindestens einem Alkylacrylat oder Alkylmethacrylat abstammen, dessen Alkygruppe 1 bis 6 Kohlenstoffatome besitzt, und

0,3 bis 2 Mol-% an von Maleinsäureanhydrid abstammenden Einheiten,

b) das Lösungsmittel (B) ausgewählt ist aus der Gruppe bestehend aus den aliphatischen, cycloaliphatischen und aromatischen Kohlenwasserstoffen, mit 5 bis 12 Kohlenstoffatomen, den Estern und den chlorhaltigen Lösungsmitteln.

2. Flüssige Mischungen nach Anspruch 1, dadurch gekennzeichnet, daß das Terpolymer eine in Zahlen ausgedrückte Molekularmasse Mn über oder gleich 5000 besitzt.

3. Flüssige Mischungen nach Anspruch 1 oder 2, dadurch gekennzeichnet, daß das Terpolymer eine Polydispersitätszahl über 5 besitzt.

4. Flüssige Mischungen nach einem der Ansprüche 1 bis 3, dadurch gekennzeichnet, daß sie homogene Lösungen mindestens eines Ethylenpolymers (A) in mindestens einem Lösungsmittel (B) sind.

5. Flüssige Mischungen nach einem der Ansprüche 1 bis 4, dadurch gekennzeichnet, daß die Kozentration des Terpolymers in dem Lösungsmittel (B) weniger als oder gleich 40 Gew.-% beträgt.

6. Flüssige Mischungen nach einem der Ansprüche 1 bis 5, dadurch gekennzeichnet, daß sie weiters ein Antihaftmittel wie Silikonöl enthalten.

7. Flüssige Mischungen nach einem der Ansprüche 1 bis 3, dadurch gekennzeichnet, daß sie waßrige Emulsionen sind, die auf 100 Gew.-Teile der Mischung aus Polymer (A) und Lösungsmittel (B) 50 bis 200 Gew.-Teile Wasser beinhalten, das mindestens einen oberflachenaktiven Stoff enthält.

8. Flüssige Mischungen nach Anspruch 7, dadurch gekennzeichnet, daß der oberflächenaktive Stoff ein nicht-ionischer Stoff ist, der in einer Menge von 0,5 bis 10 Gew.-%, bezogen auf das Polymer (A), vorliegt.

9. Flüssige Mischungen nach Anspruch 7 oder 8, dadurch gekennzeichnet, daß sie weiters mindestens ein Antischaummittel in einer Menge von höchstens 5 Gew.-%, bezogen auf das Wasser, enthalten.

10. Flüssige Mischungen nach einem der Ansprüche 7 bis 9, dadurch gekennzeichnet, daß sie weiters mindestens ein Mittel zur chemischen Modifizierung des Terpolymers in einer Menge von höchstens 2 Mol-%, bezogen auf das Terpolymer, enthalten.

11. Flüssige Mischungen nach einem der Ansprüche 7 bis 10, dadurch gekennzeichnet, daß sie weiters mindestens ein wasserlösliches Polymerstabilisiermittel in einer Menge von 0,01 bis 0,2 Gew.-%, bezogen auf das Wasser, enthalten.

12. Verfahren zur Herstellung von flüssigen Mischungen nach einem der Ansprüche 1 bis 3, dadurch gekennzeichnet, daß es in einer ersten Stufe die Auflösung des Polymers (A) durch Rühren in dem Lösungsmittel (B) bei einer solchen Temperatur T (ausgedrückt in °C) umfaßt, dab 35 ≤ T ≤ θ, wobei θ die Siedetemperatur des Lösungsmittels (B) ist.

13. Verfahren nach Anspruch 12, dadurch gekennzeichnet, daß es im Hinblick auf die Herstellung von waßrigen Emulsionen nach einem der Ansprüche 7 bis 11 in einer zweiten Stufe die allmähliche Zugabe unter intensivem Rühren bei einer Temperatur zwischen 35° und 100°C der Mischung aus Wasser, dem oberflächenaktiven Stoff und gegebenenfalls dem Antischaummittel und/oder dem Mittel zur chemischen Modifizierung umfaßt.

14. Verfahren nach Anspruch 12, dadurch gekennzeichnet, daß es im Hinblick auf die Herstellung von waßrigen Emulsionen nach einem der Ansprüche 7 bis 11 in einer zweiten Stufe die allmähliche, unter Rühren erfolgende Zugabe der in der ersten Stufe erhaltenen Lösung bei einer Temperatur zwischen 35° und 100°C in eine Mischung aus Wasser, dem oberflächenaktiven Stoff und gegebenenfalls des Antischaummittels und/oder des Mittels zur chemischen Modifizierung umfaßt.

15. Verfahren zum Beschichten eines Trägers durch Tauchen in eine oder Aufsprühen einer flüssigen Mischung enthaltend mindestens ein Ethylenpolymer (A) in mindestens einem Lösungsmittel (B), dadurch gekennzeichnet, daß die flüssige Mischung eine Mischung nach einem der Ansprüche 1 bis 11 ist.

16. Beschichtungsverfahren nach Anspruch 15, dadurch gekennzeichnet, daß die Beschichtung nach Verdampfung des Lösungsmittels und gegebenenfalls des Wassers erhalten wird.

17. Verfahren zum Verkleben zweier Stubstrate mit Hilfe eines Klebemittels, dadurch gekennzeichnet, daß des Klebemittel von einer Lösung oder einer Emulsion nach einem der Ansprüche 1 bis 5 bzw. 7 bis 11 oder von dem nach Verdampfen des Lösungsmittels und gegebenenfalls des Wassers erhaltenen Produkt gebildet wird.

**Claims**

1. Liquid mixtures at ambient temperature comprising at least one ethylene polymer (A) and at least one solvent (B), characterised in that:

a) the ethylene polymer (A) comprises at least one terpolymer with a melt index of between 2 and 500 dg/min and comprising:

from 83 to 95.7 mol% of units derived from ethylene, from 4 to 15 mol% of units derived from at least one alkyl acrylate or methacrylate, the alkyl group containing from 1 to 6 carbon atoms, and

from 0.3 to 2 mol% of units derived from maleic anhydride,

b) the solvent (B) is chosen from aliphatic, alicyclic and aromatic hydrocarbons containing from 5 to 12 carbon atoms, esters and chlorinated solvents.

2. Liquid mixtures according to Claim 1, characterized in that the terpolymer has a number average molecular mass Mn greater than or equal to 5,000.

3. Liquid mixtures according to either of Claims 1 and 2, characterized in that the terpolymer has a polydispersity index which is greater than 5.

4. Liquid mixtures according to any one of Claims 1 to 3, characterized in that they are homogeneous solutions of at least one ethylene polymer (A) in at least one solvent (B).

5. Liquid mixtures according to any one of Claims 1 to 4, characterized in that the concentration of the terpolymer in the solvent (B) is lower than or equal to 40% by weight.

6. Liquid mixtures according to any one of Claims 1 to 5, characterized in that they additionally contain a release agent such as silicone oil.

7. Liquid mixtures according to any one of Claims 1 to 3, characterized in that they are aqueous emulsions comprising from 50 to 200 parts by weight of water containing at least one surface-active agent, per 100 parts by weight of the mixture of the polymer (A) and of the solvent (B).

8. Liquid mixtures according to Claim 7, characterized in that the surface-active agent is a nonionic agent which is present in a proportion of 0.5 to 10% by weight based on the polymer (A).

9. Liquid mixtures according to either of Claims 7 and 8, characterized in that they additionally contain at least one antifoaming agent in a proportion of at most 5% by weight based on the water.

10. Liquid mixtures according to any one of Claims 7 to 9, characterized in that they additionally comprise at least one agent for modifying the terpolymer chemically in a proportion of at most 2 mol% based on the said terpolymer.

11. Liquid mixtures according to any one of Claims 7 to 10, characterized in that they additionally comprise at least one water-soluble polymeric stabilizer in a proportion of 0.01 to 0.2% by weight based on the water.

12. Process for producing liquid mixtures according to any of Claims 1 to 3, characterized in that, in a first stage, it comprises the dissolution of the polymer (A), by stirring, in the solvent (B) at a temperature T (expressed in degrees centig-

rade) such that $35 \leqslant T \leqslant \theta$, $\theta$ being the boiling temperature of the solvent (B).

13. Process according to Claim 12, characterized in that, with a view to producing aqueous emulsions according to any one of Claims 7 to 11, it comprises, in a second stage, the gradual addition, with intensive stirring at a temperature of between 35 and 100°C, of the mixture of water, surface-active agent and, where appropriate, an antifoaming agent and/or a chemical modifier.

14. Process according to Claim 12, characterized in that, with a view to producing aqueous emulsions according to any one of Claims 7 to 11, it comprises, in a second stage, the gradual addition, with stirring of the solution produced in the first stage, at a temperature of between 35 and 100°C, into a mixture of water, of surface-active agent and, where appropriate, of antifoaming agent and/or chemical modifier.

15. Process for coating a substrate by dipping in or spraying a liquid mixture comprising at least one ethylene polymer (A) in at least one solvent (B), characterized in that the said liquid mixture is a mixture according to any one of Claims 1 to 11.

16. Coating process according to Claim 15, characterized in that the coating is obtained after evaporation of the solvent and, where appropriate, of the water.

17. Process for bonding two substrates by means of an adhesive, characterized in that the adhesive consists of a solution or an emulsion according to any one of Claims 1 to 5 and 7 to 11 or of the product obtained after evaporation of the solvent and, where appropriate, of the water.